# EUROPEAN PATENT SPECIFICATION

(11) **EP 0 451 935 B1**
(45) Date of publication and mention of the grant of the patent: **26.07.1995**
(21) Application number: 91300820.7
(22) Date of filing: 01.02.1991
(51) Int. Cl.: G11B 5/54, G11B 5/016, G11B 21/08, G11B 5/012, G11B 21/26, B21D 39/06, B21D 39/14, B21J 15/34

(54) **Method and apparatus for predicting twist-out torque of a swage mount**
Verfahren und Vorrichtung zum Voraussagen des Torsionsmomentes einer Gesenkbefestigung
Procédé et appareil pour prévoir le moment de distorsion d'un support de poinçonnage

(30) Priority: 13.04.1990 US 509469
(43) Date of publication of application: 16.10.1991
(73) Proprietor: SEAGATE TECHNOLOGY INTERNATIONAL, Georgetown Grand Cayman Island (KY)
(72) Inventor: Cain, Michael Allen, Oklahoma City, Oklahoma (US); Allsup, David Scott, Norman, Oklahoma (US)
(74) Representative: Sturt, Clifford Mark

(56) References cited:
- DE-A- 2 730 719
- DE-A- 2 916 696
- US-A- 4 587 587

## Description

The present invention relates to a method and apparatus for predicting twist-out torque of a swage mount, e.g. of a swage mount used to attach a magnetic head carrying arm in a magnetic disk drive unit. Although not so restricted, the invention relates more particularly to a method and apparatus for predicting twist-out torque in a swage mounted head gimbal assembly of a magnetic disk drive unit.

There has been a continual movement to increase the storage density in magnetic disk drive units. This has been achieved in part by stacking magnetic disks in a "pack" all carried within the same disk drive unit. Each side of each disk has its own associated magnetic head used for reading and writing information thereon. Each magnetic head has its own associated support arm which positions the head above the disk surface. By moving the arm, the magnetic head moves between tracks on the disk surface. A servomotor is connected to the support arm opposite the head. The magnetic head is moved between tracks by actuating the servomotor, whereby the support arm pivots and the magnetic head at the opposite tip of the arm is swung between adjacent tracks on the disk surface. A linear actuator may alternatively be used to move a magnetic head. A linear actuator moves the head inward or outward on the disk along a generally straight line.

To increase further the space savings in the disk drive unit, a single servomotor typically controls all of the support arms and their associated magnetic heads. Thus, all of the support arms are connected together and pivot about the same pivot point. This configuration is identified as an "E-block" (which refers to the shape formed by the adjacent arms and the servomotor/pivot assembly).

A common method of connecting a magnetic head to a support arm is known as "swaging" or "ball staking". This mounting method requires less vertical space than other methods, allowing disks to be stacked closer together, thus increasing storage capacity. In swage mounting two pieces together, a hollow tube which extends from one piece is placed inside a hole in a second piece. A rounded shape (the "ball") is forced through the hollow tube which causes the metal tube to expand and lock the two pieces together.

After manufacture, forces on the magnetic head may cause the swage mount to "twist out". To ensure reliable disk drive units, manufacturers set twist-out specifications for the swage mount which must be met by all disk drive units. Manufacturers use a twist-out torque test to check swage mounts. The twist-out torque test is a destructive test in which a torque is applied to a swage mount connecting the magnetic head to a support arm. The torque required to permanently rotate the head by 0.1° is measured. Since the twist-out test is destructive, swage joints can only be tested on a sample basis. A low twist-out torque indicates that the head might have rotated at a later time, causing the drive to fail. Furthermore, the testing procedure must be performed after the swage mount operation and cannot be performed in real time.

According to the present invention, there is provided an apparatus for predicting twist-out torque of a swage mount comprising: a position sensor for sensing the position of a swaging member and producing an output representative of said position; a force sensor for sensing swaging force of the swaging member and producing an output representative of swaging force; and means connected to the position sensor and to the force sensor for receiving the output representative of the said position and the output representative of swaging force and producing an output representative of swaging work.

The apparatus preferably comprises a means for comparing swaging work to a predetermined minimum acceptable swaging work level and producing an output which indicates the relationship between the swaging work and the minimum acceptable swaging work level.

Preferably, the means for producing an output representative of swaging work comprises a computer.

The computer is preferably arranged to perform piece-wise integration of the output representative swaging force with respect to the output representative of position.

An analog-to digital converter is preferably connected to the position sensor and to the force sensor for receiving the output representative of position and the output representative of swaging force and for producing digital outputs.

The apparatus preferably comprises a ram for swage mounting a first piece to a second piece, the position sensor and the force sensor being coupled to the ram.

The first and second pieces may be respectively a flexure arm and a support arm of a magnetic storage system.

The invention also comprises a method of predicting twist-out torque of a first piece and a second piece swage mounted together, the method comprising: sensing the position of a swaging member during a swaging operation; sensing the force of the swaging member during the swaging operation; and calculating the swaging work using the said position and the force information sensed during the swaging operation.

The method preferably comprises the step of comparing the swaging work with a predetermined minimum acceptable swaging work level.

The method may also include re-swaging the first and second pieces if the calculated swaging work level is less than the minimum acceptable swaging work level.

The present invention enables predicted twist-out torque measurements to be made during the swaging operation. The technique provides a non-destructive method of predicting twist-out torque

In the preferred form of the present invention, a force sensor is connected to a ram used to force a ball through the swage mount during the swaging operation. The force sensor provides an output representative of the swaging force of the ram. A displacement sensor senses the position of the ram. A computer gathers force and displacement information from the sensors through an analog-to-digital converter. The computer uses this information to calculate work done by the ram during the swaging operation. In an E-block assembly, the computer calculates swaging work for each swage mount. The work required during swaging correlates to the twist-out torque of that swage mount. Work has been done to show the relationship of swage work to twist-out torque. The measured work done by the ram during swaging is used by the computer to predict twist out force. If the predicted value falls below a predetermined minimum specified limit, the computer rejects that particular swage mount.

When a swage mount which has been tested by the apparatus of the present invention fails this test, an operator can strengthen the mount by performing a second swaging operation using a larger diameter ball. The present invention enables yield during manufacturing to be increased by allowing the operator the opportunity to strengthen a below specification swage mount.

The invention is illustrated, merely by way of example, in the accompanying drawings, in which:-
Figure 1 shows a disk pack and an associated E-block assembly;
Figure 2 is a top view of a magnetic disk and magnetic head arm;
Figure 3 is a top view of a magnetic head arm;
Figure 4 is a side view of a magnetic head arm, a magnetic head assembly, and a magnetic disk surface;
Figure 5 is a side view of a swage mount for a magnetic disk support arm;
Figure 6 is a graph of force versus position during a swaging operation;
Figure 7 is a graph which shows the correlation between work and twist-out torque for swage mounts; and
Figure 8 is a block diagram of an apparatus for predicting twist-out torque based upon work during a swaging operation, made in accordance with the present invention.

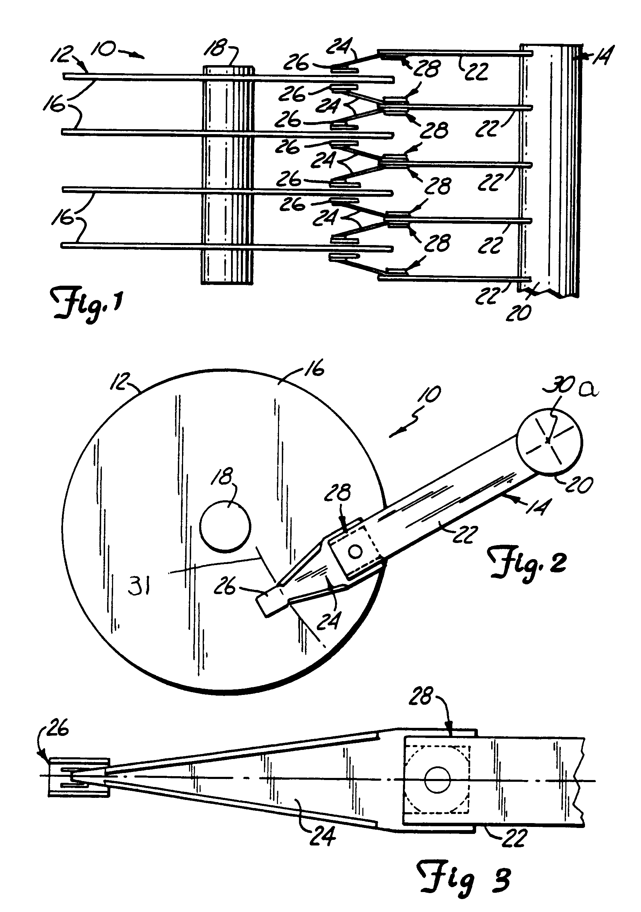

Figure 1 shows a disk drive assembly 10 comprising a disk pack 12 and an E-block assembly 14. The disk pack 12 comprises disks 16 stacked on a drive spindle 18. The E-block assembly 14 comprises a servo spindle 20 and a plurality of support arms 22. Each support arm 22 carries one or two flexure arms 24. Each flexure arm 24 carries a magnetic head assembly 26. Each flexure arm 24 connects to its corresponding support arm 22 by a swage mount 28. The method of mounting the swage mount 28 is explained below in more detail.

Figure 2 shows a top view of disk drive assembly 10 of Figure 1. The servo spindle 20 rotates around a pivot axis 30a. As the servo spindle 20 rotates, each magnetic head assembly 26 mounted at the tip of a flexure arm 24 swings through an arc 31. As a disk 16 rotates adjacent to a magnetic head 26, the pivoting motion of the servo spindle 20 allows the magnetic head assembly 26 to change track positions on the disk 16. As shown in Figure 1, as the servo spindle 20 rotates, all the magnetic head assemblies 26 move in unison.

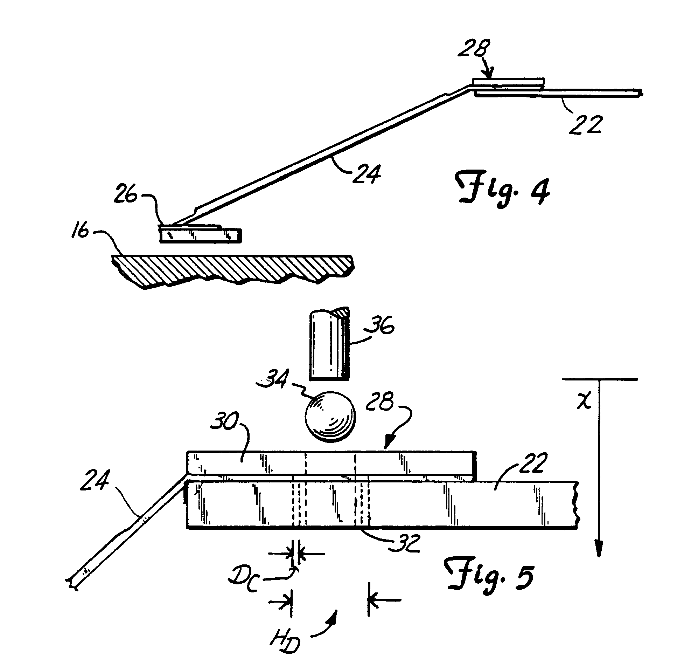

Figures 3 and 4 show a more detailed diagram of a flexure arm 24. The flexure arm 24 is spring loaded, so that its magnetic head assembly 26 is held in close proximity to the disk 16. As the disk 16 rotates at high speed about the drive spindle 18, the aerodynamic properties of the magnetic head assembly 26 cause the assembly 26 to "fly" with respect to the surface of disk 16. The flying height of the magnetic head assembly 26 from the disk 16 is a function of the speed of rotation of the disk 16, the aerodynamic lift of the magnetic head assembly 26 and the spring tension in the flexure arm 24.

Figure 5 is an enlarged view of a portion of Figure 4 and shows a side view of a swage mount 28. The swage mount 28 comprises a mounting plate 30 and a tubular member 32. The tubular member 32 is hollow and comprises a malleable material such as a metal. The tubular member 32 extends through holes in a flexure arm 24 and support arm 22. The flexure arm 24 is connected to the support arm 22 by placing the support arm 22, the flexure arm 24 and the mounting plate 30 as shown in Figure 5. The mounting plate 30 is connected to the flexure arm 24 by a weld connection. Next, a ball 34 with a diameter larger than the inner diameter of the tubular member 32 is forced through the tubular member 32 by a ram 36 so that the material of the tubular member 32 is compressed against the edges of the hole in the support arm 22.

Figure 5 shows dimensions D_{C} and H_{D} . D_{c} is the clearance between the outer diameter of the tubular member 32 and the support arm 22. H_{D} is the diameter of the hole in the support arm 22. Therefore, D_{c} is the difference between H_{D} and the outer diameter of tubular member 32. X in Figure 5 indicates the displacement of the ram 36 and the ball 34 during the swaging operation. As D_{c} increases, the force from the ram necessary to swage the mount 28 decreases.

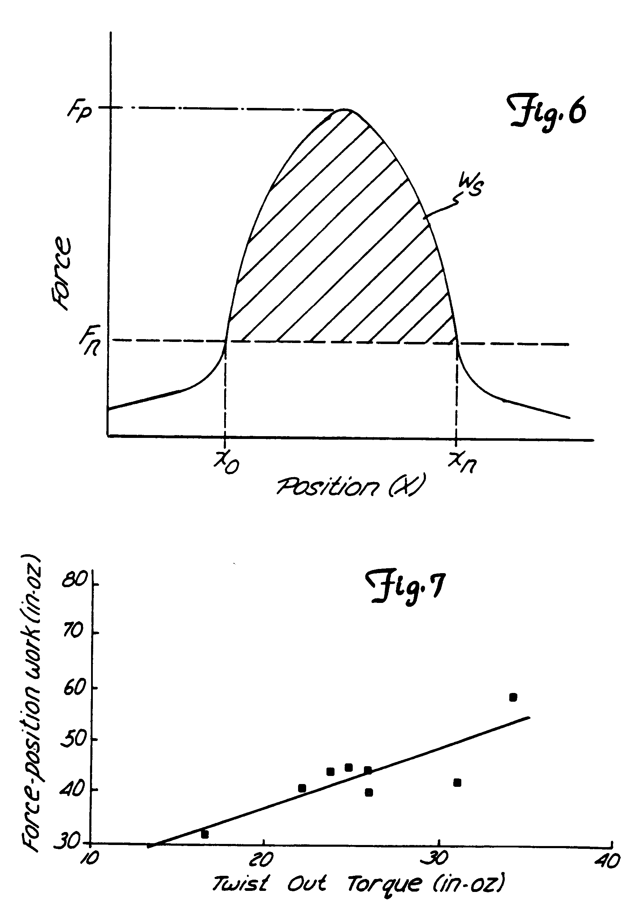

Figure 6 is a typical graph of force versus position of a ram during a swaging operation. Fₙ is a threshold force. Fₚ is the peak force of the ram during a swaging operation. The hatched area under the curve labelled Wₛ is the work performed by the ram during a swaging operation. Wₛ is the work preformed by the ram as the ram moves between a position of Xₒ and Xₙ.

The work performed by a ram during the swaging operation can be calculated using the integral (equation 1): 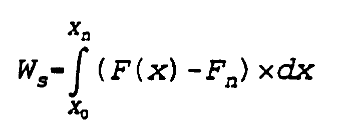
where
- F(x) =: the force of the ram at any instant of position
- Xₒ =: the start position determined by the Fₙ threshold
- Xₙ =: the end position determined by the Fₙ threshold
- Fₙ =: the minimum force required before the start of integration. Fₙ is a factor to reduce noise in the system.

In practice, this integration can be performed using a computer which implements a piece-wise integration in which the work is summed at small intervals using the equation (equation 2):

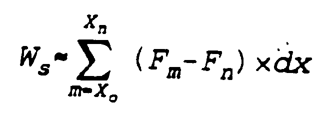

It has been discovered that the work performed by the swaging ball and ram during a swaging operation correlates with the twist out torque for that particular swage mount. Swaging work provides a better correlation with twist-out torque than peak or RMS force measurements. Figure 7 comprises data points taken for swaging work using the present invention which are plotted against actual twist out torque measurements. As shown in Figure 7, the correlation between swaging work and twist out torque can be approximated with a linear relationship.

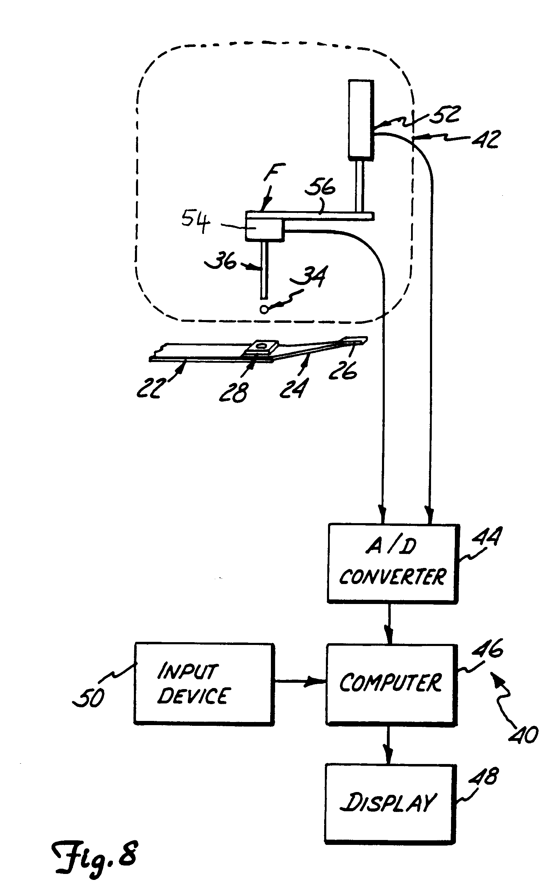

Figure 8 shows a schematic diagram of an apparatus for measuring swaging work and predicting twist out torque in accordance with the present invention. A testing device 40 gathers force and position data and calculates swaging work. In Figure 8, the testing device 40 is shown relative to a support arm 22 and a flexure arm 24 undergoing the swaging operation. The testing device 40 includes a swaging and sensor assembly 42, an analog to digital converter 44, a computer 46, a display 48 and an input device 50. The swaging and sensor assembly 42 includes a position (or displacement) sensor 52 and a force sensor 54. During swaging, force is applied to the ram 36 in the direction shown by the arrow labelled "F" in Figure 8. The force sensor 54 detects the amount of force applied to ram 36, and the displacement sensor 52 provides an output, representative of the displacement of the ram 36, to the analog to digital converter 44. The position sensor 52 is coupled to the ram 36 through a connecting piece 56.

The analog-to-digital converter 44 receives displacement and force information from the sensors 52 and 54, respectively. The analog-to-digital converter 44 provides a digital output representative of the displacement and the force of the ram 36 during the swaging operation to the computer 46. The computer 46 uses force and displacement data to calculate swaging work according to equation 2 when the force threshold level Fₒ is exceeded. The computer 46 compares the calculated swaging work with a predetermined minimum acceptable value. The predetermined minimum acceptable value is calculated for the characteristics of the particular swage mount and the diameter of the swaging ball. The predetermined value is calculated, for example, using the correlation shown in Figure 7 between swaging work and twist out torque. The predetermined minimum swaging work value should be set sufficiently high so that swage mounts fall well within twist out torque specifications. The display 48 informs the swaging operator of a below specification swage mount. The input device 50 can be used to initiate the testing process.

In response to the output of the display 48, the swaging operator can re-swage a specific, sub-specification swage mount using a larger diameter ball. Swaging with a larger diameter ball increases the strength of the swage mount and increases the twist out torque value. (Note: a large diameter swaging ball is not used in the initial swaging operation because a large diameter ball has a higher likelihood of damaging the mount and decreases the number of reswage opportunities).

In a preferred embodiment, the position sensor 52 is a linear variable differential transformer. The position sensor 52 provides a voltage output which varies linearly with displacement. The force sensor 54 is preferably a load cell which provides a voltage output which varies linearly with applied force.

## Claims

1. An apparatus for predicting twist-out torque of a swage mount (28) comprising: a position sensor (52) for sensing the position of a swaging member (36) and producing an output representative of said position; a force sensor (54) for sensing swaging force of the swaging member (36) and producing an output representative of swaging force; and means (40) connected to the position sensor (52) and to the force sensor (54) for receiving the output representative of the said position and the output representative of swaging force and producing an output representative of swaging work.

2. An apparatus as claimed in claim 1 characterised by a means (46) for comparing swaging work to a predetermined minimum acceptable swaging work level and producing an output which indicates the relationship between the swaging work and the minimum acceptable swaging work level.

3. An apparatus as claimed in claim 2 characterised in that the means for producing an output representative of swaging work comprises a computer (46).

4. An apparatus as claimed in claim 3 characterised in that the computer (46) is arranged to perform piece-wise integration of the output representative of swaging force with respect to the output representative of position.

5. An apparatus as claimed in any preceding claim characterised in that an analog-to-digital converter (44) is connected to the position sensor (52) and to the force sensor (54) for receiving the output representative of position and the output representative of swaging force and for producing digital outputs.

6. An apparatus as claimed in any preceding claim characterised in that the apparatus comprises a ram (36) for swage mounting a first piece (24) to a second piece (22), the position sensor (52) and the force sensor (54) being coupled to the ram (36).

7. An apparatus as claimed in claim 6 characterised in that the first and second pieces are respectively a flexure arm (24) and a support arm (22) of a magnetic storage system.

8. A method of predicting twist-out torque of a first piece (24) and a second piece (22) swage mounted together, the method comprising: sensing the position of a swaging member (36) during a swaging operation; sensing the force of the swaging member (36) during the swaging operation; and calculating the swaging work using the said position and the force information sensed during the swaging operation.

9. A method as claimed in claim 8 characterised by the step of comparing the swaging work with a predetermined minimum acceptable swaging work level.

10. A method as claimed in claim 9 characterised by re-swaging the first and second pieces if the calculated swaging work level is less than the minimum acceptable swaging work level.

## Patentansprüche

1. Vorrichtung zum Voraussagen des Ausdreh- oder Torsionsmomentes einer Gesenkpreßbefestigung (28) mit: einem Positionssensor (52) zur Messung der Position eines Gesenkpreßteils (36) und zur Erzeugung eines diese Position darstellenden Ausgangssignals, einem Kraftsensor (54) zur Messung der Gesenkpreßkraft des Gesenkpreßelementes (36) und zur Erzeugung eines die Gesenkpreßkraft darstellenden Ausgangssignals, und Einrichtungen (40), die mit dem Positionssensor (52) und dem Kraftsensor (54) verbunden sind, um das die Position darstellende Ausgangssignal und das die Gesenkpreßkraft darstellende Ausgangssignal zu empfangen und um ein die Gesenkpreßarbeit darstellendes Ausgangssignal zu erzeugen.

2. Vorrichtung nach Anspruch 1,
gekennzeichnet durch Einrichtungen (46) zum Vergleich der Gesenkpreßarbeit mit einem vorgegebenen minimal annehmbaren Gesenkpreß-Arbeitspegel und zur Erzeugung eines Ausgangssignals, das die Beziehung zwischen der Gesenkpreßarbeit und dem minimal annehmbaren Gesenkpreß-Arbeitspegel anzeigt.

3. Vorrichtung nach Anspruch 2,
dadurch gekennzeichnet, daß die Einrichtungen zur Erzeugung eines die Gesenkpreßarbeit darstellenden Ausgangssignals einen Computer (46) umfassen.

4. Vorrichtung nach Anspruch 3,
dadurch gekennzeichnet, daß der Computer (46) so ausgebildet ist, daß er eine stückweise Integration des die Gesenkpreßkraft darstellenden Ausgangssignals bezüglich des die Position darstellenden Ausgangssignals ausführt.

5. Vorrichtung nach einem der vorhergehenden Ansprüche,
dadurch gekennzeichnet, daß ein Analog-/Digital-Wandler (44) mit dem Positionssensor (52) und dem Kraftsensor (54) verbunden ist, um das die Position darstellende Ausgangssignal und das die Gesenkpreßkraft darstellende Ausgangssignal zu empfangen und um digitale Ausgangssignale zu erzeugen.

6. Vorrichtung nach einem der vorhergehenden Ansprüche,
dadurch gekennzeichnet, daß die Vorrichtung einen Preßstößel (36) zur Gesenkpreßbefestigung eines ersten Teils (24) an einen zweiten Teil (22) umfaßt, wobei der Positionssensor (52) und der Kraftsensor (54) mit dem Preßstößel (36) gekoppelt sind.

7. Vorrichtung nach Anspruch 6,
dadurch gekennzeichnet, daß die ersten und zweiten Teile ein biegsamer Arm (24) bzw. ein Tragarm (22) eines magnetischen Speichersystems sind.

8. Verfahren zur Voraussage des Ausdreh- oder Torsionsmomentes eines ersten Teils (24) gegenüber einem zweiten Teil (22), die durch eine Gesenkpreßbefestigung miteinander verbunden sind, wobei das Verfahren die Messung der Position eines Gesenkpreßteils (36) während eines Gesenkpreßvorganges, die Messung der Kraft des Gesenkpreßteils (36) während des Gesenkpreßvorganges und die Berechnung der Gesenkpreßarbeit unter Verwendung der während des Gesenkpreßvorganges gemessenen Positions- und Kraftinformation umfaßt.

9. Verfahren nach Anspruch 8,
gekennzeichnet durch den Schritt des Vergleichs der Gesenkpreßarbeit mit einem vorgegebenen minimal annehmbaren GesenkpreßArbeitspegel.

10. Verfahren nach Anspruch 9,
ggekennzeichnet durch eine erneute Gesenkpreßbefestigung der ersten und zweiten Teile, wenn der berechnete Gesenkpreß-Arbeitspegel kleiner als der minimal annehmbare GesenkpreßArbeitspegel ist.

## Revendications

1. Dispositif destiné à la prédiction du couple de torsion d'une monture dudgeonnée (28), comprenant : un capteur de position (52) pour détecter la position d'un élément de dudgeonnage (36) et pour produire une sortie représentative de ladite position ; un capteur de force (54) pour détecter la force de dudgeonnage de l'élément de dudgeonnage (36) et pour produire une sortie représentative de la force de dudgeonnage ; et un moyen (40) relié au capteur de position (52) et au capteur de force (54) pour recevoir la sortie représentative de ladite position et la sortie représentative de la force de dudgeonnage, et pour produire une sortie représentative du travail de dudgeonnage.

2. Dispositif selon la revendication 1, caractérisé par un moyen (46) pour comparer le travail de dudgeonnage à un niveau minimal acceptable prédéterminé du travail de dudgeonnage et pour produire une sortie qui indique la relation entre le travail de dudgeonnage et le niveau minimal acceptable prédéterminé du travail de dudgeonnage.

3. Dispositif selon la revendication 2, caractérisé en ce que le moyen servant à produire une sortie représentative du travail de dudgeonnage comprend un ordinateur (46).

4. Dispositif selon la revendication 3, caractérisé en ce que l'ordinateur (46) est destiné à effectuer une intégration pièce par pièce de la sortie représentative de la force de dudgeonnage par rapport à la sortie représentative de la position.

5. Dispositif selon l'une quelconque des revendications précédentes, caractérisé en ce qu'un convertisseur analogique/numérique (44) est relié au capteur de position (52) et au capteur de force (54) pour recevoir la sortie représentative de la position et la sortie représentative de la force de dudgeonnage, et pour produire des sorties numériques.

6. Dispositif selon l'une quelconque des revendications précédentes, caractérisé en ce que le dispositif comprend une masse frappante (36) pour le montage par dudgeonnage d'un premier élément (24) et d'un second élément (22), le capteur de position (52) et le capteur de force (54) étant reliés à la masse frappante (36).

7. Dispositif selon la revendication 6, caractérisé en ce que les premier et second éléments sont respectivement, un bras à flexion (24) et un bras de support (22) d'un système de mémoire magnétique.

8. Procédé de prédiction du couple de torsion d'un premier élément (24) et d'un second élément (22) assemblés par dudgeonnage, le procédé comprenant : la détection de la position d'un élément de dudgeonnage (36) pendant une opération de dudgeonnage ; la détection de la force de l'élément de dudgeonnage (36) pendant l'opération de dudgeonnage ; et le calcul du travail de dudgeonnage au moyen desdites informations sur la position et sur la force, détectées pendant l'opération de dudgeonnage.

9. Procédé selon la revendication 8, caractérisé par l'étape de comparaison du travail de dudgeonnage à un niveau minimal acceptable prédéterminé du travail de dudgeonnage.

10. Procédé selon la revendication 9, caractérisé par une nouvelle opération de dudgeonnage sur les premier et second éléments si le niveau calculé du travail de dudgeonnage est inférieur au niveau minimal acceptable du travail de dudgeonnage.
